# EUROPÄISCHE PATENTANMELDUNG

(11) **EP 4 303 957 A2**
(43) Veröffentlichungstag der Anmeldung: **10.01.2024**
(21) Anmeldenummer: 23180660.5
(22) Anmeldetag: 21.06.2023
(51) Int. Cl.: H01M 4/139, H01M 4/36, H01M 10/052

(54) **VERFAHREN ZUR HERSTELLUNG EINES ELEKTROLYTISCHEN ELEKTRODENTRÄGERS FÜR ELEKTROCHEMISCHE ANWENDUNGEN SOWIE ELEKTROLYTISCHER ELEKTRODENTRÄGER**

(30) Priorität: 29.06.2022 DE 102022116218
(71) Anmelder: Deutsches Zentrum für Luft- und Raumfahrt e.V., 53227 Bonn (DE)
(72) Erfinder: Kube, Alexander, 71364 Winnenden (DE); Kaz, Till, 73037 Göppingen (DE)
(74) Vertreter: RPK Patentanwälte Reinhardt und Kaufmann Partnerschaft mbB

(57) **Zusammenfassung**

Die Erfindung betrifft ein Verfahren zur Herstellung eines Elektrodenträgers (20) für elektrochemische Anwendungen, umfassend ein, insbesondere offenporiges, Substrat (10), auf das eine Elektrodenmaterial (40) enthaltende Beschichtung (60) abgeschieden wird. Ein Pulver (30) wird mit einem Trockensprühverfahren unter Wirkung eines Druckgefälles auf die zu beschichtende Oberfläche (12) des Substrats (10) aufgebracht, wobei zwischen einer zu beschichtenden Oberfläche (12) des Substrats (10) und einer gegenüberliegenden Rückseite (14) des Substrats (10) ein Unterdruck erzeugt wird. Das Substrat (10) wird an seiner zu beschichtenden Oberfläche (12) mit dem Elektrodenmaterial (40) aufweisenden Pulver (30) besprüht.

Die Erfindung betrifft ferner einen Elektrodenträger (20) und eine Batterie (100) mit wenigstens einem Elektrodenträger (20).

## Beschreibung

Die Erfindung betrifft ein Verfahren zur Herstellung eines elektrolytischen Elektrodenträgers für elektrochemische Anwendungen sowie einen elektrolytischen Elektrodenträger

### Stand der Technik

Die Leistungsfähigkeit von elektrochemischen Zellen wie beispielsweise Polymer-Elektrolyt-Brennstoffzellen oder Batterien hängt im Wesentlichen von der für die elektrochemischen Reaktionen zur Verfügung stehenden aktiven Elektroden-Oberfläche ab. Die Elektroden-Oberfläche kann nur aktiv sein, wenn sie an einen Elektrolyten angebunden ist.

Aus der US 5,761,793 A ist ein Verfahren für die Herstellung eines Teils einer elektrochemischen Zelle bekannt, bei dem ein katalytisches Pulver hergestellt wird, welches Elektrodenmaterial, Katalysatormaterial und Elektrolytmaterial umfasst. Die katalytische Schicht wird durch Aufbringen des katalytischen Pulvers auf einem Träger hergestellt, bei dem das Pulver erhitzt und durch Walzen verdichtet wird.

Aus der EP1643580A1 ist ein Verfahren bekannt, bei dem ein elektrolytischer Katalysatorträger beschichtet wird, indem Katalysatormaterial von unten nach Oben auf ein erhitztes Substrat gesprüht wird. Dadurch kann die Porosität der Katalysatorschicht verbessert werden.

### Offenbarung der Erfindung

Eine Aufgabe der Erfindung ist es, ein verbessertes Verfahren zur Herstellung eines Elektrodenträgers für elektrochemische Anwendungen anzugeben.

Eine weitere Aufgabe ist die Schaffung eines verbesserten Elektrodenträgers.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird ein Verfahren zur Herstellung eines Elektrodenträgers für elektrochemische Anwendungen vorgeschlagen, wobei der Elektrodenträger ein, insbesondere offenporiges, Substrat, auf das eine Elektrodenmaterial enthaltende Beschichtung abgeschieden wird, umfasst. Ein Pulver wird unter Wirkung eines Druckgefälles auf die zu beschichtende Oberfläche des Substrats aufgebracht, wobei zwischen einer zu beschichtenden Oberfläche des Substrats und einer gegenüberliegenden Rückseite des Substrats ein Unterdruck erzeugt wird. Das Substrat wird an seiner zu beschichtenden Oberfläche mit dem Elektrodenmaterial aufweisenden Pulver besprüht.

Beispielsweise kann das Pulver mittels einer Strömungsführung eines Trägergases aufgesprüht werden. Das Trägergas kann beispielsweise Stickstoff sein. Durch die durch den Unterdruck erreichte gezielte Strömungsführung kann vermieden werden, dass ein Großteil des Trägergasstroms an dem Substrat vorbei geleitet wird und mit diesem ein großer Teil der Partikel des Pulvers, mit denen das Substrat beschichtet werden soll. Vorteilhaft kann beispielsweise eine Absaugeinrichtung hinter dem Substrat platziert werden, mit der das Pulver gezielt auf das Substrat gelenkt wird. Hierdurch kann die Ausnutzung des Pulvers stark erhöht werden.

Bei dem eingesetzten Trockensprühverfahren, mit dem Pulver auf das Substrat aufgesprüht wird, kann im Gegensatz zur Verwendung von flüssigen Elektrodenmaterialien oder Elektrolytmaterialien die Struktur des Elektrodenträgers gezielt eingestellt werden. Der Elektrodenträger kann in einer späteren Anwendung beispielsweise als Elektrode einer elektrochemischen Zelle, insbesondere einer Batterie, dienen.

Eine gezielte Einstellung der Struktur des Elektrodenträgers ist jedoch weder mit einem Slurry-basierten Beschichtungsverfahren noch einem Walzverfahren möglich. Eine gezielt eingestellte Struktur kann jedoch die Hochstromfähigkeit einer Batterie erhöhen und somit ein schnelleres Laden der Batterie ermöglichen bei gleichzeitig höherer Kapazität als bei heutigen Hochstrombatterien.

Gegenüber Slurry-basierten Herstellverfahren benötigt das Trockensprühverfahren weniger Ressourcen und erlaubt kürzere Prozesszeiten durch den Wegfall des Trocknungsschritts, der bei dem Slurry-basierten Ansatz benötigt wird.

Gegenüber Slurry-basierten Herstellverfahren bietet das Trockensprühverfahren den Vorteil gezielter Schichteinstellung, wodurch in einer späteren Verwendung, beispielsweise in einer Batterie, diese eine höhere Stromfestigkeit aufweisen und somit schneller geladen und entladen werden kann.

Vorteilhaft ist, dass eine gezielte Struktur der Materialien über die gesamte Dicke der Beschichtung eingestellt werden kann. Elektrodenmaterial und Elektrolytmaterial können homogen gemischt sein. Alternativ kann eine Gradierung der Materialzusammensetzung in der Beschichtung erzeugt werden, die sich über die Dicke der Beschichtung verändert, insbesondere kann die Gradierung in Substratnähe minimal sein. Bei der Verwendung eines Festelektrolyten als Elektrolytmaterial kann dieser direkt mit dem Elektrodenmaterial mitgesprüht werden. Somit ist das Elektrodenmaterial gleich beim Auftragen von Elektrolytmaterial durchsetzt. Bei der Verwendung flüssiger Elektrolyte können Poren im Elektrodenmaterial später mit flüssigem Elektrolyt befüllt werden.

In einer späteren Verwendung des Elektrodenträgers in einer elektrochemischen Zelle, insbesondere einer Batterie, kann durch die innige Vermengung zwischen Elektrodenmaterial und Elektrolytmaterial ein günstiger Transportwiderstand von Ladungsträgern erreicht werden.

Vorteilhaft kann durch den Unterdruck im Substrat eine gute Haftung der Partikel des Pulvers und damit der Beschichtung auf dem Substrat erreicht werden.

Mit der Trägergasführung durch den Unterdruck im Substrat kann vermieden werden, dass es am Substrat zu unterschiedlichen Gasgeschwindigkeiten und daraus folgend zu unterschiedlichen Schichtdicken der Beschichtung kommt. Eine homogenere Beschichtung kann erreicht werden.

Nach einer günstigen Ausgestaltung des Verfahrens kann der Unterdruck durch eine Ansaugeinrichtung erzeugt werden, welche das Substrat ansaugt. Das Substrat kann durch die Ansaugung sicher gehaltert werden. Das Trägergas und somit das Pulver können durch das Substrat angesaugt werden. Eine gezielte Führung des Trägergasstroms kann erreicht werden.

Nach einer günstigen Ausgestaltung des Verfahrens kann das auf die zu beschichtende Oberfläche aufgesprühte Pulver teilweise in Poren des Substrats eingetragen oder eingesogen werden. Dies erlaubt eine innige Verbindung der Partikel des Pulvers mit dem Substrat. Durch die verbesserte Haftung können auch dicke Schichten als Beschichtung aufgetragen werden. Vorteilhaft kann der mittlere Porendurchmesser kleiner als der mittlere Partikeldurchmesser des Pulvers sein. Eine günstige Porengröße kann bei 20 µm bis 200 µm liegen, bevorzugt bei 50 µm bis 150 µm, besonders bevorzugt ist eine Porengröße von höchstens 100 µm. Günstigerweise kann das Pulver bis zu einer Tiefe im Bereich von 10 µm bis 50 µm in die Poren des Substrats eindringen. Vorteilhaft können 60% bis 90% des Pulvers in die Poren eindringen. Dies hängt von der Porengröße ab.

Das Substrat kann ein Streckmetall sein, beispielsweise aus Kupfer, Aluminium oder dergleichen. Poren können durch Perforation mittels Walzen, Stanzen oder mittels einer Laserbehandlung erzeugt werden. Derartige poröse Substrate sind im Handel erhältlich, beispielweise unter dem Namen Microgrid der Firma Dexmet Cooperation, Wallingford CT 06492, USA.

Nach einer günstigen Ausgestaltung des Verfahrens kann das aufgesprühte Pulver nach dem Auftragen verdichtet werden. Insbesondere kann die Beschichtung auf der beschichteten Oberfläche des Substrats gewalzt werden oder gepresst werden. Die Beschichtung kann damit zusätzlich auf dem Substrat fixiert werden. Das Substrat kann dabei erhitzt werden, oder das Pulver kann auf ein bereits erhitztes Substrat aufgesprüht werden.

Das Pulver kann eine Mischung von Elektrodenmaterial und Elektrolytmaterial aufweisen. Vorteilhaft ist es daher, wenn das Substrat nicht über eine Glastemperatur des Elektrolytmaterials aufgeheizt wird. Dadurch lässt sich eine Bindung der aufgebrachten Partikel des Pulvers an das Substrat erreichen, um eine Oberfläche mit dreidimensionaler Struktur zu bilden. Die Temperatur wird dabei so niedrig gewählt, dass keine chemische Zersetzung des Elektrolytmaterials erfolgt. Dadurch kann die elektrolytische Aktivität eines hergestellten Elektrodenträgers in einer späteren Anwendung in einer elektrochemischen Zelle, insbesondere einer Batterie, gewährleistet werden.

Nach einer günstigen Ausgestaltung des Verfahrens kann das Pulver in Schwererichtung auf das Substrat aufgebracht werden. Durch das Aufbringen in Schwererichtung, wobei eine Düse oberhalb des zu beschichtenden Substrats angeordnet ist und das Pulver von oben nach unten auf das Substrat aufgetragen wird, können auch dicke Schichten aufgesprüht werden, beispielsweise im Bereich von 40 µm bis 100 µm. Vorteilhaft liegen fertig platzierte Partikel des Pulvers auf dem Substrat. Vorteilhaft kann die Schichtdicke beliebig variiert werden.

Nach einer günstigen Ausgestaltung des Verfahrens kann das Pulver aus einer Mischung aus Elektrodenmaterial und Elektrolytmaterial gebildet werden. Dies erlaubt bei einer späteren Anwendung in einer elektrochemischen Zelle, insbesondere einer Batterie, einen innigen Kontakt zwischen Elektrolytmaterial und Elektrodenmaterial.

Nach einer günstigen Ausgestaltung des Verfahrens kann die Beschichtung wenigstens in zwei Schichten aufgebracht werden, bei denen ein Anteil von Elektrolytmaterial in der Mischung mit jeder aufgesprühten Schicht zunimmt. Dies erlaubt die Herstellung einer gradierten Elektrode. Dabei liegt im Endzustand in der Beschichtung Elektrodenmaterial neben Elektrolytmaterial vor. Bei der Verwendung eines Festelektrolyten als Elektrolytmaterial kann dieser direkt mit dem Elektrodenmaterial mitgesprüht werden. Somit ist das Elektrodenmaterial gleich beim Auftragen von Elektrolytmaterial durchsetzt.

Bei der Verwendung flüssiger Elektrolyte können Poren im Elektrodenmaterial später mit flüssigem Elektrolyt befüllt werden.

Vorteilhaft kann eine gezielte Struktur der Materialien über die gesamte Dicke der Beschichtung eingestellt werden. Elektrodenmaterial und Elektrolytmaterial können homogen gemischt sein.

Alternativ kann sich zur Oberfläche hin der Gehalt an Elektrolytmaterial in der Beschichtung vergrößern. Derartige gradierte Beschichtungen erlauben eine Reduzierung des Transportwiderstands von Ladungsträgern auch bei dickeren Beschichtungen beim Einsatz des Elektrodenträgers in einer elektrochemischen Zelle, insbesondere Batterie. Beispielsweise kann die erste Schicht ein Mischungsverhältnis von 1:10 von Elektrodenmaterial zu Elektrolytmaterial aufweisen, bezogen auf das Gewicht. Eine zweite Schicht kann ein Mischungsverhältnis von 1:8 von Elektrodenmaterial zu Elektrolytmaterial aufweisen, bezogen auf das Gewicht.

Bei dickeren Beschichtungen mit einer homogenen Mischung von Elektrodenmaterial und Elektrolytmaterial über die gesamte Dicke der Beschichtung kann es zu einem erhöhten Transportwiderstand kommen. Damit können Hochleistungs-Zellen bereitgestellt werden, bei denen nur dünne Beschichtungen verwendet werden, damit der Transportwiderstand nicht limitierend wirkt. Alternativ können Hochenergie-Zellen bereitgestellt werden, bei denen dicke Beschichtungen verwendet werden können. Bei diesen tritt zwar eine Limitierung durch einen erhöhten Transportwiderstand auf, so dass diese Zellen vorwiegend für kleinere Ströme eingesetzt werden. Bei einer gradierten Beschichtung mit veränderlichem Gehalt an Elektrolytmaterial wird durch die Vergrößerung des Gehalts an Elektrolytmaterial in Richtung Elektrolytbulk der Ionentransport in die Tiefe der Beschichtung ermöglicht, wodurch dickere Schichten mit höheren Strömen kombiniert werden können.

Nach einem weiteren Aspekt der Erfindung wird ein Elektrodenträger für elektrochemische Anwendungen vorgeschlagen, umfassend ein poröses Substrat, das eine Elektrodenmaterial enthaltende Beschichtung aufweist. Die Beschichtung erfolgt mit einem Trockensprühverfahren, bei dem ein Pulver auf eine zu beschichtende Oberfläche des Substrats aufgebracht ist. Dabei ist die Beschichtung unter Wirkung eines Druckgefälles aufgebracht, indem zwischen der zu beschichtenden Oberfläche des Substrats und einer gegenüberliegenden Rückseite des Substrats ein Unterdruck erzeugt, wobei das Substrat an seiner zu beschichtenden Oberfläche mit dem Elektrodenmaterial aufweisenden Pulver besprüht ist.

Vorteilhaft kann der Elektrodenträger zur Herstellung von Elektroden elektrochemischer Zellen, insbesondere Batterien, insbesondere Lithium-Ionen-Batterien verwendet werden.

Es kann eine homogene Materialzusammensetzung der Beschichtung über die gesamte Dicke der Beschichtung eingesetzt werden. Alternativ kann eine gradierte Beschichtung eingesetzt werden, die durch die Vergrößerung des Anteils an Elektrolytmaterial im Verhältnis zum Elektrodenmaterial in der Beschichtung in Richtung Elektrolytbulk den Ionentransport in die Tiefe der Elektrode ermöglicht, wodurch dickere Beschichtungen mit höheren Strömen kombiniert werden können.

Gegenüber einem walzenbasierten Verfahren bietet das Trockensprühverfahren den Vorteil gezielter Schichteinstellung, wodurch diese eine höhere Stromfestigkeit haben und somit schneller geladen/entladen werden können. Weiterhin können durch das Aufbringen der einzelnen Schichten der elektrochemischen Zelle, insbesondere Batterie (Anode, Trennschicht, Kathode) die Grenzflächen besser aufeinander eingestellt werden. Dies resultiert in einem besseren Kontakt und dadurch geringerem Widerstand der Gesamtzelle. Dies reduziert die thermische Belastung bei Schnellladen der Batterie und sorgt hierdurch für eine bessere Zyklenfestigkeit und Lebensdauer.

Nach einer günstigen Ausgestaltung des Elektrodenträgers kann das Pulver teilweise in Poren des Substrats innerhalb des Substrats vorliegen. Dies erlaubt eine verbesserte Haftung der Beschichtung auf dem Substrat. Positiv bei Stromabnehmern mit Poren oder Löchern ist zusätzlich die Gewichtsersparnis.

Nach einer günstigen Ausgestaltung des Elektrodenträgers kann das Pulver als Mischung von Elektrodenmaterial und Elektrolytmaterial bereitgestellt werden. Damit lässt sich eine gezielte Struktur in der Beschichtung erreichen. Kommt die Beschichtung mit einem Elektrolytbulk in Verbindung, ist bereits Elektrolytmaterial in der Beschichtung vorhanden, was einen günstigen niedrigen Transportwiderstand ergibt.

Nach einer günstigen Ausgestaltung des Elektrodenträgers kann die Beschichtung wenigstens zwei Schichten aufweisen, bei denen ein Anteil von Elektrolytmaterial in der Mischung mit jeder aufgesprühten Schicht zunimmt. Vorteilhaft kann ein Gradient im Anteil des Elektrolytmaterials in der Beschichtung abhängig von der Dicke der Beschichtung und der Zahl der aufgesprühten Schichten eingestellt werden.

Nach einer günstigen Ausgestaltung des Elektrodenträgers kann das Pulver als Elektrodenmaterial ein oder mehrere lithiumhaltige Oxide aufweist, beispielsweise wenigstens eine von Lithium-Eisenphosphat (LFP), Lithium-Nickel-Mangan-Kobalt-Oxid (NMC), Lithium-Mangan-Nickel-Oxid (LMNO), Lithium-Nickel-Mangan-Aluminium-Oxid (NMA). Dies ist günstig, wenn der Elektrodenträger als Kathode in einer Lithium-Ionen-Batterie eingesetzt werden soll.

Nach einer günstigen Ausgestaltung des Elektrodenträgers kann das Pulver als Elektrodenmaterial Silizium und/oder Graphit aufweisen. Dies ist günstig, wenn der Elektrodenträger als Anode in einer Lithium-Ionen-Batterie eingesetzt werden soll.

Nach einer günstigen Ausgestaltung des Elektrodenträgers kann das Pulver als Elektrolytmaterial ein lithiumhaltiges Material aufweisen.

Nach einer günstigen Ausgestaltung des Elektrodenträgers können die Poren des Substrats einen Durchmesser von 20 µm bis 200 µm aufweisen, bevorzugt 50 µm bis 150 µm, besondere bevorzugt ist eine Porengröße von höchstens 100 µm. Vorteilhaft ist der Porendurchmesser im Substrat kleiner als der mittlere Porendurchmesser der Partikel des Pulvers.

Nach einem weiteren Aspekt der Erfindung wird eine Batterie, insbesondere Lithium-Ionen-Batterie, vorgeschlagen mit wenigstens einem erfindungsgemäßen Elektrodenträger als Anode oder Kathode.

Elektroden für Li-lonen-Batterien werden heute hauptsächlich über die Herstellung von so genannten Slurries, die anschließend auf ein Substrat gerakelt werden, hergestellt. Bei diesem Verfahren werden verschiedene umweltgefährdende Lösungsmittel eingesetzt, die in weiteren Prozessschritten aus der Elektrode verdampft werden sowie aus der Abluft wieder kondensiert und wiederverwendet werden.

Da dieses Verfahren sehr teuer ist, wird versucht, auf eine trockene Herstellung zu wechseln. Hierbei werden vor allem Walzverfahren trockener Pulver benutzt.

Vorteilhaft kann eine Herstellung von Festkörper-Li-Ionen-Batterien bereitgestellt werden. Bei diesen ist die übliche Technologie im Stand der Technik das Aufbringen von so genannten Slurries, bei welchen die verwendeten Lösemittel nachträglich verdampft werden müssen und aufgrund ihrer Umweltschädlichkeit sowie Kosten wieder kondensiert und wiederverwendet werden. Durch Verwendung des vorgeschlagenen Elektrodenträgers können die Kosten reduziert, die Umweltverträglichkeit der Herstellung verbessert werden sowie die Produktionszeit verkürzt werden. Das vorgeschlagene Verfahren erlaubt die Herstellung von Li-lonen-Batterien mit homogener Schichtdicke der Beschichtung.

Mit dem Wechsel von flüssigen Elektrolyten auf feste Elektrolyte bietet sich die Möglichkeit, die Elektrodenstruktur gezielt einzustellen. Dies ist jedoch weder mit dem Slurry-basierten Verfahren noch dem Walzverfahren möglich. Eine gezielt eingestellte Struktur erlaubt es, die Hochstromfähigkeit der Batterie zu erhöhen und somit ein schnelleres Laden der Batterie zu ermöglichen bei gleichzeitig höherer Kapazität als bei heutigen Hochstrombatterien.

Es kann eine homogene Zusammensetzung über die gesamte Beschichtung, d.h. die gesamte Elektrodendicke erzeugt werden. Durch die Mischung von Elektrodenmaterial und Elektrolytmaterial in dem Pulver, das bei der Herstellung des Elektrodenträgers auf das Substrat aufgesprüht wird, liegt bereits Elektrolytmaterial im der Beschichtung vor. Alternativ kann eine gradierte Beschichtung erzeugt werden, die durch eine Vergrößerung des Anteils an Elektrolytmaterial in Richtung Elektrolytbulk den Ionentransport in die Tiefe der Elektrode ermöglicht, wodurch dickere Elektrodenschichten mit höheren Strömen kombiniert werden können. Dies wird erreicht, indem mit zunehmender Dicke der Beschichtung auf dem Substrat ein zunehmender Gehalt an Elektrolytmaterial bei dem aufgesprühten Pulver vorliegt.

Ein Vorteil gezielter Schichteinstellung besteht darin, dass eine höhere Stromfestigkeit erreicht werden kann und die Batterie somit schneller geladen und entladen werden kann. Weiterhin können durch das Aufbringen der einzelnen Schichten der Batterie (Anode, Trennschicht, Kathode) die Grenzflächen besser aufeinander eingestellt werden. Dies resultiert in einem besseren Kontakt und dadurch geringerem Transportwiderstand der Gesamtzelle. Dies reduziert die thermische Belastung bei Schnellladen der Batterie und sorgt hierdurch für eine bessere Zyklenfestigkeit und Lebensdauer.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine schematische Darstellung eines Trockensprühvorgangs nach einem Ausführungsbeispiel der Erfindung;
- Fig. 2: eine schematische Darstellung einer homogenen Beschichtung nach einem Ausführungsbeispiel der Erfindung;
- Fig. 3: eine schematische Darstellung einer mehrlagigen Beschichtung zur Erzeugung einer gradierten Beschichtung nach einem Ausführungsbeispiel der Erfindung;
- Fig. 4: eine schematische Darstellung einer gradierten Beschichtung nach einem Ausführungsbeispiel der Erfindung;
- Fig. 5: eine schematische Darstellung eines Trockensprühvorgangs nach einem Ausführungsbeispiel der Erfindung;
- Fig. 6: ein Flussdiagramm des Beschichtungsvorgangs nach Figur 5;
- Fig. 7: in schematischer Darstellung einen Schnitt durch eine Batterie.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

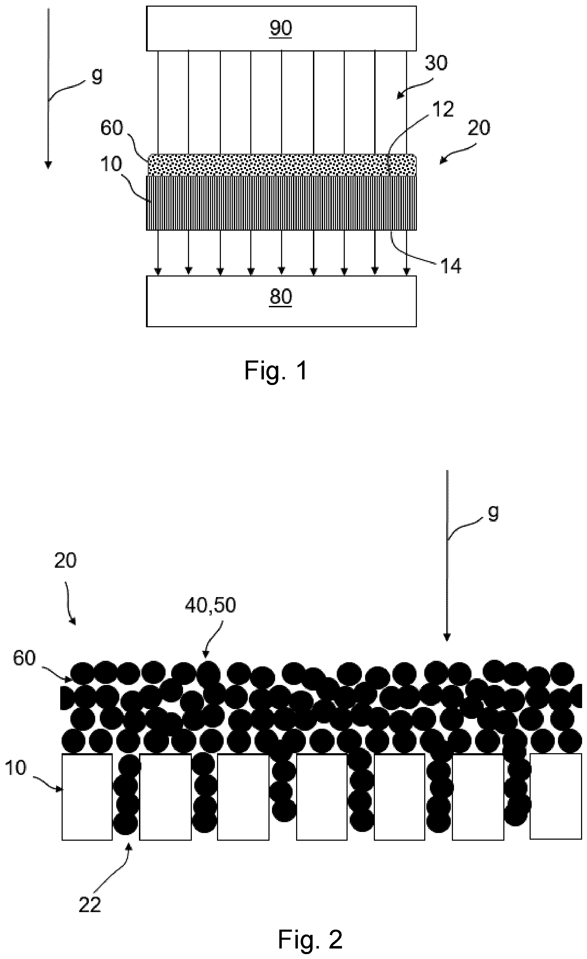

Figur 1 zeigt eine schematische Darstellung eines Trockensprühvorgangs zur Herstellung eines Elektrodenträgers 20 für elektrochemische Anwendungen nach einem Ausführungsbeispiel der Erfindung.

Auf ein Substrat 10 wird eine Beschichtung 60 mittels eines Trockensprühverfahrens aufgetragen. Partikel eines Pulvers 30 werden dabei mit einer Düse 90 in Schwererichtung g auf das Substrat 10 aufgesprüht. Das Substrat 10 ist offenporig ausgebildet, so dass das Pulver 30 durch das Substrat 10 angesaugt werden kann. Somit kann das Pulver 30 unter Wirkung eines Druckgefälles auf die zu beschichtende Oberfläche 12 des Substrats 10 aufgebracht werden. Das Druckgefälle kann durch einen zwischen der zu beschichtenden Oberfläche 12 des Substrats 10 und einer gegenüberliegenden Rückseite 14 des Substrats 10 vorliegenden Unterdruck erzeugt werden. Das mit der Beschichtung 60 beschichtete Substrat 10 bildet den Elektrodenträger 20.

Das Pulver 30 weist ein Elektrodenmaterial auf mit einem oder mehreren lithiumhaltigen Oxiden, beispielsweise ein oder mehrere Chromoxide, insbesondere CoO und/oder C_{O3}O₄, zur Verwendung als Kathode einer Batterie, oder Silizium oder Graphit oder eine Mischung aus Silizium und Graphit zur Verwendung als Anode einer Batterie. Ebenso weist das Pulver 30 ein Elektrolytmaterial auf, das insbesondere ein lithiumhaltiges Material sein kann.

Das Substrat 10 kann beispielsweise metallisch sein, insbesondere ein Streckmetall, das durch Walzen oder durch Laserbestrahlung perforiert ist. Hierdurch bilden sich durch das Substrat 10 durchgehende Poren aus.

Zur Erzeugung des Unterdrucks kann das Substrat 10 auf eine nicht dargestellte Ansaugeinrichtung aufgelegt werden, welche das Substrat 10 ansaugt und gleichzeitig den Unterdruck im Substrat 10 einstellt.

Durch das Aufsprühen in Schwererichtung g und das Ansaugen des Pulvers 30 durch das Substrat 10 kann dieses gezielt auf dem Substrat 10 platziert werden. Ein Verlust von Pulver 30 durch eine ungünstige Gasströmung oder ein Entstehen von Inhomogenitäten der Dicke der Beschichtung 60 kann vermieden werden.

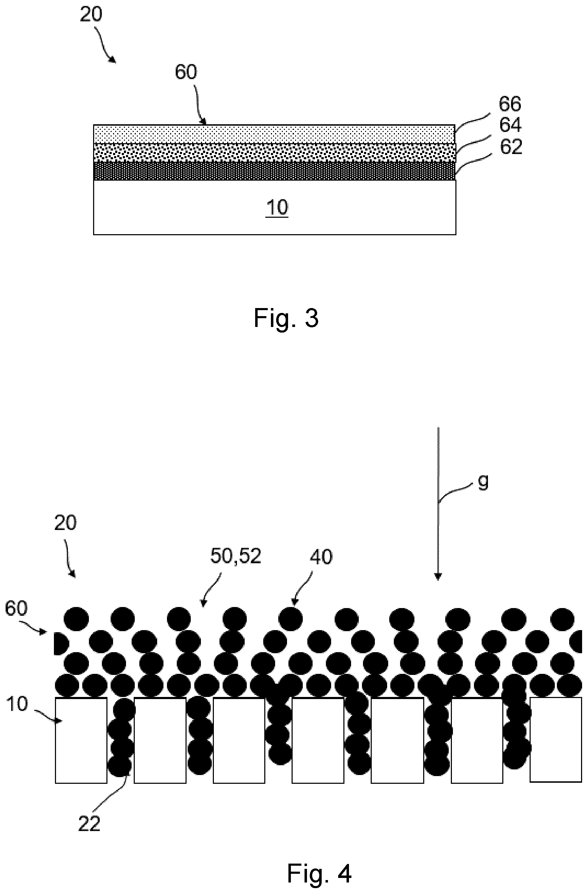

Wie den Figuren 2 bis 4 zu entnehmen ist, kann die Beschichtung 60 mit unterschiedlichen Strukturen auf dem Substrat des Elektrodenträgers 20 erzeugt werden. Figur 2 zeigt eine schematische Darstellung einer homogenen Struktur in der Beschichtung 60, während Figur 4 eine gradierte Beschichtung mit Bereichen 52 von Elektrolytmaterial 50 in der Beschichtung 60 zeigt.

Die Poren 22 im Substrat 10 des Elektrodenträgers 20 sind vereinfacht als senkrechte Kanäle dargestellt. Je nach Herstellverfahren kann deren Form abweichen. In jedem Fall kann ein Trägergas, insbesondere Stickstoff, durch das Substrat 10 angesaugt werden.

Partikel des auf die zu beschichtende Oberfläche 12 aufgesprühten Pulvers 30 (Figur 1) werden teilweise in Poren 22 des Substrats 10 eingetragen oder eingesogen. Nach dem Auftrag kann die Beschichtung 60 in einem Kalander oder einer Presse fixiert werden.

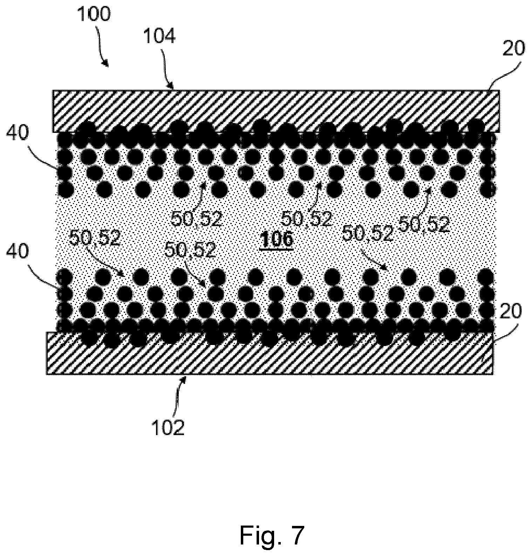

In der Beschichtung 60 liegen Elektrodenmaterial 40 und Elektrolytmaterial 50 gemischt vor. Die Partikel des Elektrolytmaterials 50 werden dabei mit den Partikeln des Elektrodenmaterials 40 gemischt aufgesprüht. Kommt die Beschichtung 60 des Elektrodenträgers 20 beispielweise als Elektrode in einer Batterie mit einem Elektrolyten 106 (Figur 7) in Kontakt, ragt der Elektrolyt 106 (Figur 7) wegen der Partikel des Elektrolytmaterials 50 in der Beschichtung 60 tief in die Beschichtung 60 oder sogar das Substrat 10 hinein.

Wie in Figur 4 zu erkennen ist, vergrößern sich die Bereiche 52 mit Elektrolytmaterial 50 im Elektrodenmaterial 40 mit wachsendem Abstand der Beschichtung 60 von der Oberfläche 12 des Substrats.

Dies kann erreicht werden, indem die Beschichtung 60 in zwei oder mehr Schichten 62, 64, 66 aufgebracht wird, bei denen ein Anteil von Elektrolytmaterial 50 in der Mischung mit jeder aufgesprühten Schicht 62, 64, 66 zunimmt. Dies ist in Figur 3 in einer schematische Darstellung einer mehrlagigen Beschichtung zur Erzeugung einer gradierten Beschichtung 60 nach Figur 4 dargestellt.

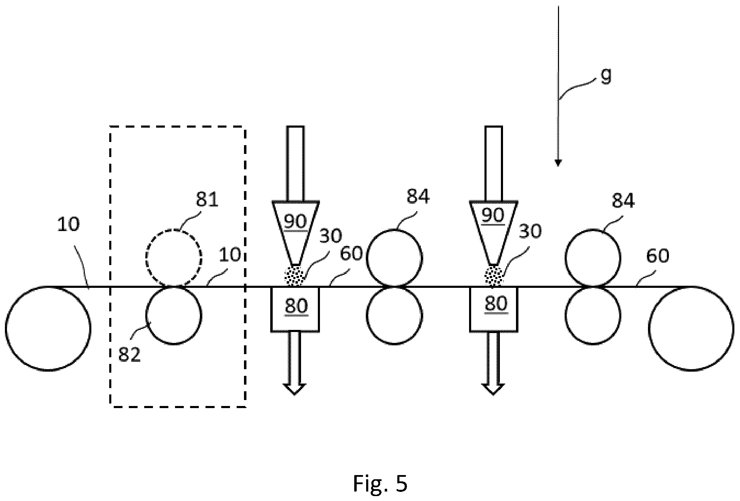

Figur 5 zeigt schematisch einen Trockensprühvorgang in einer Beschichtungsanlage nach einem Ausführungsbeispiel der Erfindung, bei dem eine Beschichtung 60 auf ein Substrat 10 aufgetragen wird. Das Substrat 10 wird beispielsweise als Rollenmaterial zur Verfügung gestellt und über einen Antrieb 82 zu einer Düse 90 einer Sprühstation transportiert. Optional kann das Substrat 10 vor der Sprühstation mittels Walzen oder dergleichen in einer Perforierstation 81 perforiert werden oder ein perforiertes Substrat 10 dort nachbehandelt werden.

Bei der ersten Sprühstation findet ein erster Sprühvorgang statt, bei dem ein Pulver 30 aus der Düse 90 in Schwererichtung g auf das Substrat 10 gesprüht werden.

In dem Pulver 30 liegen Elektrodenmaterial 40 und Elektrolytmaterial 50 gemischt vor. Nach dem Aufsprühen wird das Substrat 10 mit der Beschichtung 60 in einer darauffolgenden Fixierstation 84 auf dem Substrat 10 fixiert und komprimiert und zu einer weiteren Düse 90 transportiert und weiter beschichtet, beispielsweise mit einer anderen Mischung, die einen höheren Gehalt an Elektrolytmaterial 50 enthält, besprüht.

Anschließend wird die Beschichtung 60 mittels einer weiteren Fixierstation 84 auf dem Substrat fixiert und komprimiert und das beschichtete Substrat 10 als Elektrodenträger 20 in Form von Rollenmaterial auf einer Rolle aufgerollt.

Das Substrat 10 kann im Durchlaufverfahren beschichtet werden. Zweckmäßigerweise findet nach jedem Sprühvorgang eine Fixierung und Kompression der Beschichtung 60 statt.

Bei einer homogenen Beschichtung 60 kann mit einer Düse gearbeitet werden. Bei dickeren Beschichtungen 60 ist es jedoch günstig, mit zwei oder mehr Düsen 90 zu arbeiten. Die Zahl der Düsen 90 kann abhängig von der Schichtdicke und/oder der gewünschten Gradierung der Beschichtung 60 gewählt werden.

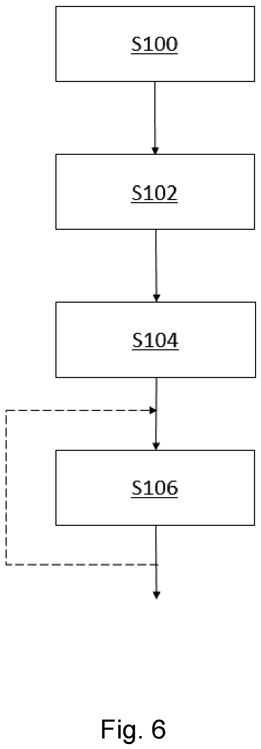

Figur 6 zeigt ein Flussdiagramm eines Verfahrens zur Herstellung eines Elektrodenträgers 20 nach einem Ausführungsbeispiel der Erfindung.

In Schritt S100 wird Pulver 30 bestehend aus einer Mischung von Elektrodenmaterial 40 und Elektrolytmaterial 50 in eine oder mehrere Düsen 90 der Beschichtungsanlage aus Figur 5 gefüllt. In den verschiedenen Düsen 90 können Pulver 30 mit unterschiedlichen Gehalten an Elektrolytmaterial 50 vorliegen.

In Schritt S102 werden die Parameter des Sprühvorgangs oder der Sprühvorgänge eingestellt, insbesondere Trägergasstrom und Absaugung, die am Substrat 10 anliegen sollen.

In Schritt S104 wird die Förderung des Substrats 10 aktiviert, und der Trockensprühvorgang wird gestartet.

In Schritt S106 wird mittels einer ersten Düse 90 eine erste Mischung, insbesondere mit wenig Elektrolytmaterial 50 und viel Elektrodenmaterial 40, auf das Substrat 10 aufgesprüht und die erste abgeschiedene Schicht anschließend mit einer Fixierstation 84 auf dem Substrat 10 fixiert, beispielsweise mit einer Presse oder einer Walze.

Dieser Schritt kann mehrfach an weiteren Düsen 90 wiederholt werden, wobei dort jeweils Pulver 30 aufgesprüht werden können, deren Gehalt an Elektrolytmaterial 50 mit jedem weiteren Schichtauftrag bzw. jeder weiteren Düse 90 zunimmt.

Der fertiggestellte Elektrodenträger 20 kann dann als Elektrode mit einem Elektrolyten 106 beschichtet werden und, je nach verwendeten Materialien, als Anode 102 oder Kathode 104 einer Batterie 100 verwendet werden.

Figur 7 zeigt in schematischer Darstellung einen Schnitt durch eine Batterie 100, bei der jeweils ein Elektrodenträger 20 eine Anode 102 und eine Kathode 104 bildet. Anode 102 und Kathode 104 sind durch einen Elektrolyten 106 verbunden.

Der Elektrolyt 106 koppelt an das Elektrolytmaterial 50 an, das die Bereiche 52 im Elektrodenmaterial 40 bildet. Der Elektrolyt 106 weist dasselbe Elektrolytmaterial 50 auf wie in den Bereichen 52 der Elektrodenträger 20 vorliegt. Der Übersichtlichkeit wegen sind nur einige der Bereiche 52 mit Bezugszeichen versehen.

Der Elektrodenträger 20 auf der Kathodenseite weist als Elektrodenmaterial 40 beispielsweise ein oder mehrere lithiumhaltige Oxide auf, beispielsweise wenigstens eines von Lithium-Eisenphosphat (LFP), Lithium-Nickel-Mangan-Kobalt-Oxid (NMC), Lithium-Mangan-Nickel-Oxid (LMNO), Lithium-Nickel-Mangan-Aluminium-Oxid (NMA), während der Elektrodenträger 20 auf der Anodenseite beispielsweise Silizium oder Graphit oder eine Mischung aus Silizium und Graphit aufweist.

Auf der Kathodenseite kann das Substrat des Elektrodenträgers 20 beispielsweise Aluminium sein. Günstige alternative Materialien sind beispielsweise Kohlenstoffmatten, Kohlenstoffvlies, Kohlenstoffgewebe, Nickel, Edelstahl Eine günstige Dicke liegt im Bereich 5 µm bis 50 µm.

Auf der Anodenseite kann das Substrat des Elektrodenträgers 20 beispielsweise Kupfer sein. Günstige alternative Materialien sind beispielsweise Edelstahl, Titan Eine günstige Dicke liegt im Bereich von 5 µm bis 50 µm.

### Bezugszeichen

- 10: Substrat
- 12: zu beschichtende Oberfläche
- 14: Rückseite Substrat
- 20: Elektrodenträger
- 22: Poren
- 30: Pulver
- 40: Elektrodenmaterial
- 50: Elektrolytmaterial
- 52: Bereich mit Elektrolytmaterial
- 60: Beschichtung
- 62: Schicht
- 64: Schicht
- 66: Schicht
- 80: Ansaugeinrichtung
- 81: Perforierstation
- 82: Antrieb
- 84: Fixierstation
- 90: Düse
- 100: Batterie
- 102: Anode
- 104: Kathode
- 106: Elektrolyt
- S100: Bereitstellen Substrat
- S102: Erzeugen Druckgefälle
- S104: Start Trockensprühvorgang
- S106: Beschichten und Verdichten
- g: Schwererichtung

## Patentansprüche

1. Verfahren zur Herstellung eines Elektrodenträgers (20) für elektrochemische Anwendungen, umfassend ein, insbesondere offenporiges, Substrat (10), auf das eine Elektrodenmaterial (40) enthaltende Beschichtung (60) abgeschieden wird,
wobei ein Pulver (30) mit einem Trockensprühverfahren unter Wirkung eines Druckgefälles auf die zu beschichtende Oberfläche (12) des Substrats (10) aufgebracht wird,
wobei zwischen einer zu beschichtenden Oberfläche (12) des Substrats (10) und einer gegenüberliegenden Rückseite (14) des Substrats (10) ein Unterdruck erzeugt wird,
wobei das Substrat (10) an seiner zu beschichtenden Oberfläche (12) mit dem Elektrodenmaterial (40) aufweisenden Pulver (30) besprüht wird.

2. Verfahren nach Anspruch 1, wobei der Unterdruck durch eine Ansaugeinrichtung (80) erzeugt wird, welche das Substrat (10) ansaugt.

3. Verfahren nach Anspruch 1 oder 2, wobei das auf die zu beschichtende Oberfläche (12) aufgesprühte Pulver (30) teilweise in Poren (22) des Substrats (10) eingetragen oder eingesogen wird.

4. Verfahren nach einem der vorhergehenden Ansprüche, wobei das aufgesprühte Pulver (30) nach dem Auftragen verdichtet wird, insbesondere wobei die Beschichtung (60) auf der beschichteten Oberfläche (12) des Substrats (10) gewalzt wird oder gepresst wird.

5. Verfahren nach einem der vorhergehenden Ansprüche, wobei das Pulver (30) in Schwererichtung (g) auf das Substrat (10) aufgebracht wird.

6. Verfahren nach einem der vorhergehenden Ansprüche, wobei das Pulver (30) aus einer Mischung aus Elektrodenmaterial (40) und Elektrolytmaterial (50) gebildet wird.

7. Verfahren nach Anspruch 6, wobei die Beschichtung (60) wenigstens in zwei Schichten (62, 64, 66) aufgebracht wird, bei denen ein Anteil von Elektrolytmaterial (50) in der Mischung mit jeder aufgesprühten Schicht (62, 64, 66) zunimmt.

8. Elektrodenträger (20) für elektrochemische Anwendungen, umfassend ein poröses Substrat (10), das eine Elektrodenmaterial (40) enthaltende Beschichtung (60) aufweist, die mit einem Trockensprühverfahren hergestellt ist, bei dem ein Pulver (30) auf eine zu beschichtende Oberfläche (12) des Substrats (10) unter Wirkung eines Druckgefälles aufgebracht ist, indem zwischen der zu beschichtenden Oberfläche (12) des Substrats (10) und einer gegenüberliegenden Rückseite (14) des Substrats (10) ein Unterdruck erzeugt ist, wobei das Substrat (10) an seiner zu beschichtenden Oberfläche (12) mit dem Elektrodenmaterial (40) aufweisenden Pulver (30) besprüht ist.

9. Elektrodenträger nach Anspruch 8, wobei das Pulver (30) teilweise in Poren (22) des Substrats (10) innerhalb des Substrats (10) vorliegt.

10. Elektrodenträger nach Anspruch 8 oder 9, wobei das Pulver (30) als Mischung von Elektrodenmaterial (40) und Elektrolytmaterial (50) bereitgestellt wird.

11. Elektrodenträger nach einem der Ansprüche 8 bis 10, wobei die Beschichtung (60) wenigstens zwei Schichten (62, 64, 66) aufweist, bei denen ein Anteil von Elektrolytmaterial (50) in der Mischung mit jeder aufgesprühten Schicht (62, 64, 66) zunimmt.

12. Elektrodenträger nach einem der Ansprüche 8 bis 11, wobei das Pulver (30) als Elektrodenmaterial (40) ein oder mehrere lithiumhaltige Oxide aufweist.

13. Elektrodenträger nach einem der Ansprüche 8 bis 11, wobei das Pulver (30) als Elektrodenmaterial (40) Silizium und/oder Graphit aufweist.

14. Elektrodenträger nach einem der Ansprüche 8 bis 13, wobei das Pulver (30) als Elektrolytmaterial (50) ein lithiumhaltiges Material aufweist.

15. Elektrodenträger nach einem der Ansprüche 8 bis 14, wobei die Poren des Substrats einen Durchmesser von 20 µm bis 200 µm aufweisen.

16. Batterie (100), insbesondere Lithiumionen-Batterie, mit wenigstens einem Elektrodenträger (20) nach einem der Ansprüche 8 bis 15 als Anode (102) und/oder Kathode (104).
